# EUROPEAN PATENT SPECIFICATION

(11) **EP 3 852 475 B1**
(45) Date of publication and mention of the grant of the patent: **16.08.2023**
(21) Application number: 18935188.5
(22) Date of filing: 26.09.2018
(51) Int. Cl.: H04L 5/00, H04L 1/00

(54) **CARRIER PROCESSING METHOD, TERMINAL, AND NETWORK DEVICE**
TRÄGERVERARBEITUNGSVERFAHREN, UND ENDGERÄT
PROCÉDÉ DE GESTION DE PORTEUSE, TERMINAL, ET DISPOSITIF DE RÉSEAU

(43) Date of publication of application: 21.07.2021
(73) Proprietor: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN); LIN, Yanan, Dongguan, Guangdong 523860 (CN)
(74) Representative: Tansini, Elio Fabrizio
(86) International application number: PCT/CN2018/107571
(87) International publication number: WO 2020/061804

(56) References cited:
- EP-A1- 3 706 458
- EP-A1- 3 826 393
- WO-A1-2016/121637
- US-A1- 2017 086 172
- US-A1- 2017 347 270
- US-B2- 9 276 711

## Description

### Technical Field

The present invention relates to wireless communication technology, specifically to a method for processing a carrier, a terminal, and a network device.

### Background

Carrier aggregation may cause a terminal device to use multiple carriers to send and receive data at the same time, which improves data transmission rate and system working efficiency. Activation or deactivation of a carrier may be realized by a signaling control or a Timer control. However, a signaling or a timer controlling the activation or the deactivation of the carrier has a longer effect taking delay, that is, the activation or the deactivation of the carrier is performed, after an interval of the effect taking delay, after the signaling is received or after the timer expires.

However, in a 5G system, due to a larger bandwidth of component carriers, a data packet may be transmitted completely within an extremely short duration, therefore, the above longer effect taking delay is very unfavourable for a requirement of a lower transmission delay. On the other hand, a service of a terminal has a transient characteristic of coming and going, and the above longer effect taking delay is also unfavourable for saving power consumption by the terminal in a scenario where the terminal needs deactivation of a carrier within the time when the terminal has no service.

The documents US2017/086172, WO2016/121637, US9276711 and US2017/347270 disclose the related art of the present disclosure.

### Summary

Embodiments of the present application provide a method for processing a carrier, a terminal, a network device and a storage medium, which can shorten data transmission delay and save power consumption of a terminal.

The invention is set out in the appended set of claims.

In a first aspect, a method for processing a carrier by a terminal is provided in independent claim 1.

In a second aspect, a terminal is provided in independent claim 5.

In a third aspect, a network device is provided in independent claim 7.

According to the above technical solution of the present application, activation or deactivation of a carrier is quickly realized through an indication of DCI received within a first time unit. On one hand, when a terminal has service data, fast activation of a carrier can greatly shorten transmission delay of the service data and meet service requirement for transmission delay; on the other hand, when the terminal has no service data, fast deactivation of a carrier can greatly save power consumption of the terminal, prolong standby time of the terminal and even service life of a terminal battery, and also greatly improve using experience of a user from the other hand.

### Brief Description of Drawings

FIG. 1 is a schematic diagram of architecture of a communication system according to an embodiment of the present application.
FIG. 2 is a schematic flowchart of a method for processing a carrier according to an embodiment of the present application.
FIG. 3 is a schematic flowchart of another method for processing a carrier according to an embodiment of the present application.
FIG. 4 is a schematic block diagram of a terminal according to an embodiment of the present application.
FIG. 5 is a schematic block diagram of a network device according to an embodiment of the present application.
FIG. 6 is a schematic diagram of structure of hardware of a communication device according to an embodiment of the present application.
FIG. 7 is a schematic block diagram of a chip according to an embodiment of the present application.

### Detailed Description

Technical solutions in embodiments of the present application will be described below with reference to the drawings in embodiments of the present application. It is apparent that the embodiments described are just a part of embodiments of the present application, but not all embodiments of the present application.

Embodiments of the invention are those whose scope is within that of the appended claims. Other passages stating embodiments which do not fall under the scope of the appended claims are to be considered as examples.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a 5G system, etc.

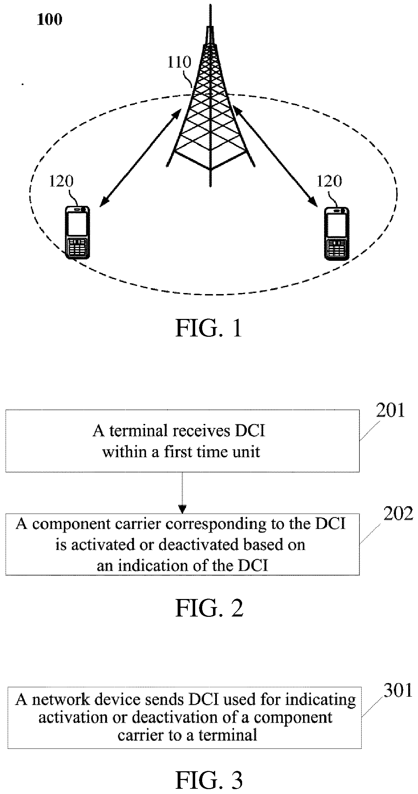

Illustratively, a communication system 100 applied in an embodiment of the present application is shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or a CDMA system, a NodeB (NB) in a WCDMA system, an Evolutional Node B (eNB or eNodeB) in an LTE system, or a radio controller in a Cloud Radio Access Network (CRAN), or the network device may be a mobile switch center, a relay station, an access point, a vehicle-mounted device, a wearable device, a hub, a switch, a bridge, a router, or a network side device in a 5G network, or a network device in a future evolved Public Land Mobile Network (PLMN), etc.

The communication system 100 also includes at least one terminal device 120 located within the coverage area of the network device 110. As used herein, the term "terminal device" includes, but not limited to, a device configured to connect via a wired circuit, for example, via Public Switched Telephone Networks (PSTN), a Digital Subscriber Line (DSL), a digital cable, or a direct cable; and/or another data connection/network; and/or via a wireless interface, for example, for a cellular network, a Wireless Local Area Network (WLAN), a digital television network such as a DVB-H network, a satellite network, or an AM-FM broadcast sender; and/or an apparatus, of another terminal device, configured to receive/send a communication signal; and/or an Internet of Things (IoT) device. A terminal device configured to communicate via a wireless interface may be referred to as a "wireless communication terminal", a "wireless terminal" or a "mobile terminal". Examples of the mobile terminal include, but not limited to, a satellite or cellular telephone, a Personal Communication System (PCS) terminal which may combine with a cellular radio telephone and data processing, faxing, and data communication abilities, a PDA that may include a radio telephone, a pager, an Internet/intranet access, a Web browser, a memo pad, a calendar, and/or a Global Positioning System (GPS) receiver, and a conventional laptop and/or palmtop receiver or another electronic apparatus including a radio telephone transceiver. The terminal device may be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) telephone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved PLMN, or the like.

Optionally, Device to Device (D2D) communication may be performed between the terminal devices 120.

Optionally, the 5G system or the 5G network may also be referred to as a New Radio (NR) system or an NR network.

FIG. 1 shows one network device and two terminal devices as an example. Optionally, the communication system 100 may include multiple network devices, and another quantity of terminal devices may be included within a coverage area of each network device, and this is not limited in the embodiments of the present application.

Optionally, the communication system 100 may also include another network entity such as a network controller, a mobile management entity, or the like, which is not limited in the embodiments of the present application.

It should be understood that, a device with a communication function in a network/system in the embodiments of the present application may be referred to as a communication device. Taking the communication system 100 shown in FIG. 1 as an example, the communication device may include a network device 110 and a terminal device 120 which have communication functions, and the network device 110 and the terminal device 120 may be the specific devices described above, which will not be repeated here again; and the communication device may also include another device in the communication system 100, for example, another network entity such as a network controller, a mobile management entity, or the like, which is not limited in the embodiments of the present application.

It should be understood that the terms "system" and "network" herein are often used interchangeably in this document. The term "and/or" in this document is merely an association relationship describing associated objects, indicating that there may be three relationships, for example, A and/or B may indicate three cases: A alone, both of A and B, and B alone. In addition, the symbol "/" in this document generally indicates that objects before and after the symbol "/" have an "or" relationship.

An embodiment of the present application provides a method for processing a carrier. FIG. 2 is a schematic flowchart of a method for processing a carrier according to an embodiment of the present application. As shown in FIG. 2, the method includes acts 201 to 202.

In act 201: a terminal receives DCI within a first time unit.

In act 202: the terminal activates or deactivates a component carrier corresponding to the DCI based on an indication of the DCI.

The present embodiment is applicable to an application scenario where the terminal transmits data in a carrier aggregation mode, and the component carrier corresponding to the DCI is activated or deactivated according to the indication of the received DCI. Herein, the activated or deactivated component carrier may be a secondary carrier.

As an implementation, the terminal listens to the DCI through a Physical Downlink Control Channel (PDCCH) and receives the DCI within the first time unit. Here, the first time unit represents a preset time unit. As an example, the first time unit is a time slot. It can be understood that the terminal listens to the DCI through the PDCCH and receives the DCI within a time slot n (n is a positive integer).

As an implementation, the terminal activates or deactivates the component carrier corresponding to the DCI based on the indication of the DCI, including: the terminal activates or deactivates the component carrier corresponding to the DCI when a value of a specific field of the DCI is a specific value.

In the present embodiment, the value of the specific field of the DCI is the specific value. As an implementation, the specific field is an existing field in the DCI at present, then the specific value of the specific field is a value which will not be used in a scheduling process of the DCI at present, and the corresponding component carrier is activated or deactivated based on the specific value. In this way, the activation or the deactivation of the carrier is realized, and meanwhile, an influence on scheduling of the DCI is avoided. As another implementation, the specific field is a field which does not exist in the DCI at present, that is, the specific field is a newly added field, then the specific value of the specific field may be any pre-agreed or pre-configured value, and the corresponding component carrier is activated or deactivated based on the specific value.

In an optional embodiment of the present application, the terminal activates or deactivates the component carrier corresponding to the DCI based on the indication of the DCI, including: when a value of a first specific field of the DCI is a first specific value, the terminal deactivates the component carrier corresponding to the DCI in a deactivation mode; or, the terminal activates the component carrier corresponding to the DCI in an activation mode.

In the present embodiment, the first specific value is an unused value of the first specific field in the DCI at present. The value of the first specific field being the first specific value corresponds to that the component carrier corresponding to the deactivation or the component carrier corresponding to the activation may be determined by adopting a pre-agreed or pre-configured mode. For example, when the value of the first specific field of the DCI is a, the terminal deactivates the component carrier corresponding to the DCI in a deactivation mode; or, the terminal activates the component carrier corresponding to the DCI in an activation mode. Or, the value of the first specific value may be of two, that is, when the value of the first specific field of the DCI is a1, the terminal deactivates the component carrier corresponding to the DCI in the deactivation mode; when the value of the first specific field of the DCI is a2, the terminal activates the component carrier corresponding to the DCI in the activation mode.

Herein, when the terminal deactivates the component carrier corresponding to the DCI in the deactivation mode, a behavior of the terminal on the component carrier includes at least one of following behaviors: not sending any Sounding Reference Signal (SRS); not performing any measurement of Channel Quality Indicators (CQIs), and not reporting any CQI, Precoding Matrix Indicator (PMI), Rank Indication (RI) or Precoding Type Indication (PTI); not transmitting uplink data; not detecting any PDCCH used for the component carrier and transmitted on the component carrier; or reducing a frequency of a measurement, if it is used as a reference for a path loss measurement in an uplink power control, etc. When the terminal activates the component carrier corresponding to the DCI in the activation mode, the behavior of the terminal on the component carrier includes at least one of following behaviors: sending an SRS; performing a measurement of a CQI and reporting at least one of a CQI, a PMI, an RI or a PTI; transmitting uplink data; detecting a PDCCH used for the component carrier and transmitted on the component carrier; or used as a reference for a path loss measurement in an uplink power control, etc.

In an optional embodiment of the present application, the terminal activates or deactivates the component carrier corresponding to the DCI based on the indication of the DCI, including: when a value of a second specific field of the DCI is a second specific value, the terminal deactivates the component carrier corresponding to the DCI in a first deactivation mode; and when the value of the second specific field is a third specific value, the terminal deactivates the component carrier corresponding to the DCI in a second deactivation mode.

In the present embodiment, both of the second specific value and the third specific value are unused values of the second specific field in the DCI at present. The value of the second specific field being that the second specific value corresponds to the first deactivation mode, and the value of the second specific field being that the third specific value corresponds to the second deactivation mode may be determined in a pre-agreed or pre-configured mode. For example, when the value of the second specific field of the DCI is b1, the terminal deactivates the component carrier corresponding to the DCI in the first deactivation mode; and when the value of the second specific field of the DCI is b2, the terminal deactivates the component carrier corresponding to the DCI in the second deactivation mode. The present implementation is applicable to a scenario where there is a certain specific field in the DCI that may take two kinds of specific values, wherein the two kinds of specific values may be used for indicating the first deactivation mode or the second deactivation mode, respectively.

In an optional embodiment of the present application, the terminal activates or deactivates the component carrier corresponding to the DCI based on the indication of the DCI, including: when a value of a third specific field of the DCI is a fourth specific value, the terminal deactivates the component carrier corresponding to the DCI in the first deactivation mode; and when a value of a fourth specific field of the DCI is a fifth specific value, the terminal deactivates the component carrier corresponding to the DCI in the second deactivation mode.

In the present embodiment, the fourth specific value is an unused value of the third specific field in the DCI at present. The fifth specific value is an unused value of the fourth specific field in the DCI at present. The value of the third specific field being that the fourth specific value corresponds to the first deactivation mode, and the value of the fourth specific field being that the fifth specific value corresponds to the second deactivation mode may be determined in a pre-agreed or pre-configured mode. For example, when the value of the third specific field of the DCI is c, the terminal deactivates the component carrier corresponding to the DCI in the first deactivation mode; and when the value of the fourth specific field of the DCI is d, the terminal deactivates the component carrier corresponding to the DCI in the second deactivation mode. The present implementation is applicable to a scenario where there are two specific fields in the DCI that may take specific values, wherein the specific values respectively corresponding to the two specific fields are used for indicating the first deactivation mode or the second deactivation mode respectively.

In the above embodiment, when the terminal deactivates the component carrier corresponding to the DCI in the first deactivation mode, the behavior of the terminal on the component carrier includes at least one of following behaviors: not sending any SRS; not measuring any CQI, and not reporting any CQI, PMI, RI or PTI; not transmitting uplink data; not detecting any PDCCH used for the component carrier and transmitted on the component carrier; or reducing a frequency of a measurement, if it is used as a reference for a path loss measurement of an uplink power control. That is, after the component carrier is deactivated in the first deactivation mode, the terminal does not perform any transmission of data and uplink signals on the component carrier, and does not listen to any PDCCH and does not receive any PDSCH, and the terminal only performs a Radio Resource Management (RRM) measurement according to a measurement configuration for a purpose of carrier addition or the like.

When the terminal deactivates the component carrier corresponding to the DCI in the second deactivation mode, the behavior of the terminal on the component carrier includes at least one of following behaviors: performing a measurement of a CQI; or reporting at least one kind of information of a CQI, a PMI, an RI or a PTI; or performing a measurement of an RRM. In the second deactivation mode of the present embodiment, the terminal reserves performing the measurement of the CQI; reporting at least one kind of information of the CQI, the PMI, the RI or the PTI; or performing an RRM measurement, etc., so that when the terminal needs to activate the component carrier again, the network device has acquired related information of the component carrier, which is conducive to that the network device may quickly resume data transmission based on the related information of the component carrier.

In the above embodiments, the specific field, the first specific field, the second specific field, the third specific field or the fourth specific field of the DCI is at least one of following: a newly added information field for activation or deactivation of a carrier, a frequency domain resource assignment information field, a time domain resource assignment information field, or a Hybrid Automatic Repeat reQuest (HARQ) process number information field.

As a first kind of example, the newly added information field for the activation or the deactivation of the carrier uses 1 bit. For example, a value of 0 indicates that the corresponding component carrier is deactivated, or a value of 0 indicates that the corresponding component carrier is activated; or, a value of 0 indicates that the corresponding component carrier is deactivated according to a first deactivation mode, and a value of 1 indicates that the corresponding component carrier is deactivated according to a second deactivation mode, and so on.

As a second kind of example, the frequency domain resource assignment information field (denoted as "Frequency domain resource assignment"), for example, a value of 0 indicates that the corresponding component carrier is deactivated, or a value of 0 indicates that the corresponding component carrier is activated; or, a value of 0 indicates that the corresponding component carrier is deactivated according to the first deactivation mode, and a value of 1 indicates that the corresponding component carrier is deactivated according to the second deactivation mode, and so on.

As a third kind of example, the time domain resource assignment information field (denoted as "Time domain resource assignment") uses 4 bits. For example, a value of 0000 indicates that the corresponding component carrier is deactivated, or a value of 0000 indicates that the corresponding component carrier is activated; or, a value of 0000 indicates that the corresponding component carrier is deactivated according to the first deactivation mode, and a value of 1111 indicates that the corresponding component carrier is deactivated according to the second deactivation mode, and so on.

As a fourth kind of example, a HARQ process number information field (denoted as "HARQ process number") uses 4 bits. For example, a value of 0000 indicates that the corresponding component carrier is deactivated, or a value of 0000 indicates that the corresponding component carrier is activated; or, a value of 0000 indicates that the corresponding component carrier is deactivated according to the first deactivation mode, and a value of 1111 indicates that the corresponding component carrier is deactivated according to the second deactivation mode, and so on.

As a fifth kind of example, for example, the value of the frequency domain resource assignment information field is 0, and activation of the corresponding component carrier is performed; the value of time domain resource assignment information field is 0000, and deactivation of the corresponding component carrier is performed. For another example, the value of the frequency domain resource assignment information field is 0, and activation of the corresponding component carrier is performed; the value of the time domain resource assignment information field is 0000, and deactivation of the corresponding component carrier is performed according to the first deactivation mode; the value of the time domain resource assignment information field is 1111, and deactivation of the corresponding component carrier is performed according to the second deactivation mode.

In the present embodiment, the DCI is DCI with a specific format. For example, the specific format of the DCI may be DCI format 0_0 or DCI format 1_0 or DCI format 0_1 or DCI format 1_1. The specific format had by the DCI is used for informing a terminal of that the DCI is DCI for indicating activation or deactivation of a carrier, so as to distinguish it from DCI for data scheduling. For example, when the DCI adopts the specific format, a bit length of its effective payload is different from that of the DCI for the data scheduling.

In the present embodiment, the DCI is DCI scrambled with a Radio Network Tempory Identity (RNTI) in a specific format. The RNTI with the specific format is an RNTI different from a current format, so as to distinguish it from the DCI for the data scheduling.

In an optional embodiment of the present application, receiving the Downlink Control Information (DCI) includes: the terminal receives the DCI in a search space corresponding to the component carrier corresponding to the DCI; or, the terminal receives the DCI in a pre-agreed specific component carrier; or, the terminal receives the DCI in a pre-configured specific component carrier. For example, the terminal receives the DCI in a pre-agreed or pre-configured secondary carrier.

In an optional embodiment of the present application, the terminal activates or deactivates the component carrier corresponding to the DCI based on the indication of the DCI, including: the terminal activates or deactivates the component carrier corresponding to the DCI within a second time unit based on the indication of the DCI; and the second time unit is separated from the first time unit by a specific quantity of time slots.

In the present embodiment, the second time unit is the same as the first time unit, and both of them represent preset time units; that is, the second time unit is a time slot. As an example, the terminal activates or deactivates the component carrier corresponding to the DCI within a time slot (n+k); wherein, k is a positive integer. Herein, separated by the specific quantity of time slots (e.g., a k value) may be determined in a pre-agreed or pre-configured mode.

Herein, a time slot is a time slice in a Time Division Multiplexing mode (TDM). Taking an E1 (short for 30-channel Pulse Code Modulation (PCM)) line as an example, each time slot occupies 8 bits in an E1 frame, that is, a time slot is 8 bit-times (a bit-time is a duration needed to transmit 1 bit). In the present embodiment, a time slot is used as a preset time unit, and after the DCI is received within the first time unit, activation or deactivation of the corresponding component carrier is performed separating the specific quantity of time slots. However, in an LTE system, when a terminal receives an activation signaling of a certain carrier in a subframe n, it starts corresponding carrier activation in a subframe n+8. 1 subframe equals to 1 millisecond, that is, corresponding carrier activation or deactivation is able to be started after 8 milliseconds. Compared with the solution, in the embodiment of the present application, the DCI is received in a time slot n, and the component carrier corresponding to the DCI is activated or deactivated in a time slot (n+k), which realizes fast activation or deactivation of the component carrier.

According to the above technical solution of the present application, firstly, the activation or the deactivation of the carrier is quickly realized through the indication of the DCI received within the first time unit. On one hand, when the terminal has service data, fast activation of the carrier can greatly shorten the transmission delay of the service data and meet the service requirement for transmission delay; on the other hand, when the terminal has no service data, the fast deactivation of the carrier can greatly save power consumption of the terminal, prolong standby time of the terminal and even the service life of a terminal battery, and also greatly improve using experience of a user from the other hand. Secondly, a specific value, which is not used in data scheduling, of an existing field in the DCI is used to indicate the activation or the deactivation of the component carrier, or to indicate a deactivation mode of the component carrier (including the first deactivation mode and the second deactivation mode), which realizes the activation or the deactivation of the carrier and meanwhile avoids an influence on a current DCI design. Thirdly, by indicating different deactivation modes, on one hand, it is realized that power consumption of the terminal is reduced when there is no service data, and on the other hand, the network device may choose the second deactivation mode according to a situation, which is conducive to that the efficient transmission of data can be quickly restored when the component carrier is activated again.

An embodiment of the present application also provides a method for processing a carrier. FIG. 3 is a schematic flowchart of another method for processing a carrier according to an embodiment of the present application. As shown in FIG. 3, the method includes act 301.

In act 301: a network device sends DCI used for indicating activation or deactivation of a component carrier to a terminal.

The present embodiment is applicable to an application scenario where the terminal transmits data in a carrier aggregation mode. The network device sends the DCI to the terminal, and the terminal activates or deactivates the component carrier corresponding to the DCI according to an indication of the received DCI. Herein, the activated or deactivated component carrier may be a secondary carrier or a primary carrier.

In the present embodiment, the network device maps the DCI to a PDCCH transmission.

As an implementation, a value of a specific field of the DCI is a specific value.

In the present embodiment, the value of the specific field of the DCI is the specific value. As an implementation, the specific field is an existing field in the DCI at present, then the specific value of the specific field is a value which will not be used in a scheduling process of the DCI at present, and the corresponding component carrier is activated or deactivated based on the specific value. In this way, the activation or the deactivation of the carrier is realized, and meanwhile, an influence on scheduling of the DCI is avoided. As another embodiment, the specific field is a field which does not exist in the DCI at present, that is, the specific field is a newly added field, then the specific value of the specific field may be any pre-agreed value, so that the terminal activates or deactivates the corresponding component carrier based on the specific value.

In an optional embodiment of the present application, when a value of a first specific field of the DCI is a first specific value, the DCI is used for indicating that the component carrier is deactivated in a first deactivation mode.

In the present embodiment, the first specific value is an unused value of the first specific field in the DCI at present. The value of the first specific field being the first specific value corresponds to that the deactivation of the corresponding component carrier or the activation of the corresponding component carrier may be determined in a pre-agreed mode. For example, when the value of the first specific field of the DCI is a, the terminal deactivates the component carrier corresponding to the DCI in a deactivation mode; or, the terminal activates the component carrier corresponding to the DCI in an activation mode. Or, the value of the first specific value may be of two, that is, when the value of the first specific field of the DCI is a1, the terminal deactivates the component carrier corresponding to the DCI in the deactivation mode; when the value of the first specific field of the DCI is a2, the terminal activates the component carrier corresponding to the DCI in the activation mode.

In an optional embodiment of the present application, when a value of a second specific field of the DCI is a second specific value, the DCI is used for indicating that the component carrier is deactivated in the first deactivation mode; when the value of the second specific field is a third specific value, the DCI is used for indicating that the component carrier is deactivated in a second deactivation mode.

In the present embodiment, both of the second specific value and the third specific value are unused values of the second specific field in the DCI at present. The value of the second specific field being that the second specific value corresponds to the first deactivation mode, and the value of the second specific field being that the third specific value corresponds to the second deactivation mode may be determined in a pre-agreed mode. For example, when the value of the second specific field of the DCI is b1, the terminal deactivates the component carrier corresponding to the DCI in the first deactivation mode; when the value of the second specific field of the DCI is b2, the terminal deactivates the component carrier corresponding to the DCI in the second deactivation mode. The present implementation is applicable to a scenario where there is a certain specific field in the DCI that may take two kinds of specific values, wherein the two kinds of specific values may be used for indicating the first deactivation mode or the second deactivation mode, respectively.

In an optional embodiment of the present application, when the value of the third specific field of the DCI is a fourth specific value, the DCI is used for indicating that the component carrier is deactivated in the first deactivation mode; when the value of the fourth specific field of the DCI is a fifth specific value, the DCI is used for indicating that the component carrier is deactivated in the second deactivation mode.

In the present embodiment, the fourth specific value is an unused value of the third specific field in the DCI at present. The fifth specific value is an unused value of the fourth specific field in the DCI at present. The value of the third specific field being that the fourth specific value corresponds to the first deactivation mode, and the value of the fourth specific field being that the fifth specific value corresponds to the second deactivation mode may be determined in a pre-agreed mode. For example, when the value of the third specific field of the DCI is c, the terminal deactivates the component carrier corresponding to the DCI in the first deactivation mode; when the value of the fourth specific field of the DCI is d, the terminal deactivates the component carrier corresponding to the DCI in the second deactivation mode. The implementation is applicable to a scenario where there are two specific fields in the DCI that may take specific values, wherein the specific values respectively corresponding to the two specific fields are used for indicating the first deactivation mode or the second deactivation mode respectively.

In the above embodiment, the specific field, the first specific field, the second specific field, the third specific field or the fourth specific field of the DCI is at least one of following: a newly added information field for activation or deactivation of a carrier, a frequency domain resource assignment information field, a time domain resource assignment information field, or a HARQ process number information field.

As a first kind of example, the newly added information field for the activation or the deactivation of the carrier uses 1 bit. For example, a value of 0 indicates that the corresponding component carrier is deactivated, or a value of 0 indicates that the corresponding component carrier is activated; or, a value of 0 indicates that the corresponding component carrier is deactivated according to a first deactivation mode, and a value of 1 indicates that the corresponding component carrier is deactivated according to a second deactivation mode, and so on.

As a second kind of example, the frequency domain resource assignment information field (denoted as "Frequency domain resource assignment"), for example, a value of 0 indicates that the corresponding component carrier is deactivated, or a value of 0 indicates that the corresponding component carrier is activated; or, a value of 0 indicates that the corresponding component carrier is deactivated according to the first deactivation mode, and a value of 1 indicates that the corresponding component carrier is deactivated according to the second deactivation mode, and so on.

As a third kind of example, the time domain resource assignment information field (denoted as "Time domain resource assignment") uses 4 bits. For example, a value of 0000 indicates that the corresponding component carrier is deactivated, or a value of 0000 indicates that the corresponding component carrier is activated; or, a value of 0000 indicates that the corresponding component carrier is deactivated according to the first deactivation mode, and a value of 1111 indicates that the corresponding component carrier is deactivated according to the second deactivation mode, and so on.

As a fourth kind of example, the HARQ process number information field (denoted as "HARQ process number") uses 4 bits. For example, a value of 0000 indicates that the corresponding component carrier is deactivated, or a value of 0000 indicates that the corresponding component carrier is activated; or, a value of 0000 indicates that the corresponding component carrier is deactivated according to the first deactivation mode, and a value of 1111 indicates that the corresponding component carrier is deactivated according to the second deactivation mode, and so on.

As a fifth kind of example, for example, the value of the frequency domain resource assignment information field is 0, which indicates that the corresponding component carrier is activated; the value of time domain resource assignment information field is 0000, which indicates that the corresponding component carrier is deactivated. For another example, the value of the frequency domain resource assignment information field is 0, which indicates that the corresponding component carrier is activated; the value of the time domain resource assignment information field is 0000, which indicates that the corresponding component carrier is deactivated according to the first deactivation mode; the value of the time domain resource assignment information field is 1111, which indicates that the corresponding component carrier is deactivated according to the second deactivation mode.

In the present embodiment, the DCI is DCI with a specific format. For example, the specific format of the DCI may be DCI format 0_0 or DCI format 1_0 or DCI format 0_1 or DCI format 1_1. The specific format had by the DCI is used for informing a terminal of that the DCI is DCI for indicating activation or deactivation of a carrier, so as to distinguish it from DCI for data scheduling. For example, when the DCI adopts the specific format, a bit length of its effective payload is different from that of the DCI for the data scheduling.

In the present embodiment, the DCI is DCI scrambled with a RNTI in a specific format. The RNTI with the specific format is an RNTI different from a current format, so as to distinguish it from the DCI for the data scheduling.

In an optional embodiment of the present application, the network device sends the DCI used for indicating activation or deactivation of the component carrier to the terminal, including: the network device sends the DCI in a search space corresponding to the component carrier corresponding to the DCI; or, the network device sends the DCI in a pre-agreed specific component carrier; or, the network device sends the DCI in a pre-configured specific component carrier.

According to the above technical solution of the present application, firstly, the DCI used for indicating the activation or the deactivation of the component carrier is sent through the network device, so that the terminal receives the DCI within the first time unit and quickly realizes the activation or the deactivation of the carrier based on the indication of the DCI. On one hand, when the terminal has service data, fast activation of the carrier can greatly shorten transmission delay of the service data and meet service requirement for transmission delay; on the other hand, when the terminal has no service data, fast deactivation of the carrier can greatly save power consumption of the terminal, prolong standby time of the terminal and even service life of a terminal battery, and also greatly improve using experience of a user from the other hand. Secondly, a specific value, which will not be used in data scheduling, of an existing field in the DCI is used to indicate the activation or the deactivation of the component carrier, or to indicate a deactivation mode of the component carrier (including the first deactivation mode and the second deactivation mode), which realizes the activation or the deactivation of the carrier and meanwhile avoids an influence on a current DCI design. Thirdly, by indicating different deactivation modes, on one hand, it is realized that power consumption of the terminal is reduced when there is no service data, and on the other hand, the network device may choose the second deactivation mode according to a situation, which is conducive to that efficient transmission of data can be quickly restored when the component carrier is activated again.

An embodiment of the present application also provides a method for processing a carrier, including following acts S11 to S13.

In S11: a network device sends DCI used for indicating activation or deactivation of a component carrier to a terminal.

In S12: the terminal receives the DCI within a first time unit.

In S13: the terminal activates or deactivates the component carrier corresponding to the DCI based on an indication of the DCI.

A specific implementation of each act in the present embodiment may refer to the descriptions in the above embodiments, and will not be repeated here again.

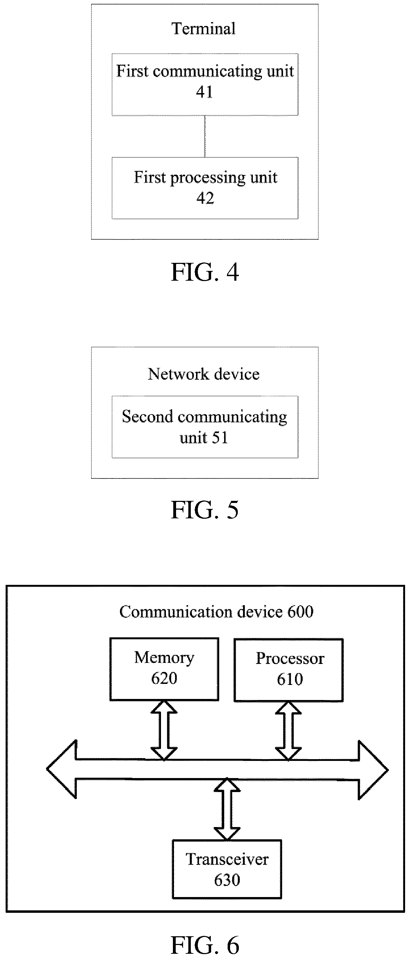

An embodiment of the present application further provides a terminal. FIG 4 is a schematic block diagram of a terminal according to an embodiment of the present application. As shown in FIG. 4, the terminal includes a first communicating unit 41 and a first processing unit 42; wherein, the first communicating unit 41 is configured to receive Downlink Control Information (DCI) within a first time unit; and the first processing unit 42 is configured to activate or deactivate a component carrier corresponding to the DCI based on an indication of the DCI received by the first communicating unit 41.

In an optional embodiment of the present application, the first processing unit 42 is configured to activate or deactivate the component carrier corresponding to the DCI when a value of a specific field of the DCI is a specific value.

In an optional embodiment of the present application, the first processing unit 42 is configured to deactivate the component carrier corresponding to the DCI in a deactivation mode when a value of a first specific field of the DCI is a first specific value; or, activate the component carrier corresponding to the DCI in an activation mode.

In an optional embodiment of the present application, the first processing unit 42 is configured to deactivate the component carrier corresponding to the DCI in a first deactivation mode when a value of a second specific field of the DCI is a second specific value; and deactivate the component carrier corresponding to the DCI in a second deactivation mode when the value of the second specific field is a third specific value.

In an optional embodiment of the present application, the first processing unit 42 is configured to deactivate the component carrier corresponding to the DCI in the first deactivation mode when a value of a third specific field of the DCI is a fourth specific value; and deactivate the component carrier corresponding to the DCI in the second first deactivation mode when a value of a fourth specific field of the DCI is a fifth specific value.

In the present embodiment, the specific field, the first specific field, the second specific field, the third specific field or the fourth specific field of the DCI is at least one of following: a newly added information field for activation or deactivation of a carrier, a frequency domain resource assignment information field, a time domain resource assignment information field, or a HARQ process number information field

In the present embodiment, the DCI is DCI with a specific format.

In the present embodiment, the DCI is DCI scrambled with a RNTI in a specific format.

In an optional embodiment of the present application, the first communicating unit 41 is configured to receive the DCI in a search space corresponding to the component carrier corresponding to the DCI, or, receive the DCI in a pre-agreed specific component carrier; or, receive the DCI in a pre-configured specific component carrier.

In an optional embodiment of the present application, the first processing unit 42 is configured to activate or deactivate the component carrier corresponding to the DCI within a second time unit based on the indication of the DCI; and the second time unit is separated from the first time unit by a specific quantity of time slots.

In an optional embodiment of the present application, when the terminal deactivates the component carrier corresponding to the DCI in the first deactivation mode, a behavior of the terminal on the component carrier includes at least one of following behaviors: not sending any SRS; not performing any measurement of CQIs, and not reporting any CQI, PMI, RI or PTI; not transmitting uplink data; not detecting any PDCCH used for the component carrier and transmitted on the component carrier; or reducing a frequency of a measurement, if it is used as a reference for a path loss measurement of an uplink power control.

In an optional embodiment of the present application, when the terminal deactivates the component carrier corresponding to the DCI in the second deactivation mode, a behavior of the terminal on the component carrier includes at least one of following behaviors: performing a measurement of a CQI; reporting at least one kind of information of a CQI, a PMI, an RI or a PTI; or performing a measurement of an RRM.

It should be noted that the division of the aforementioned program modules is just taken as an example for description when the terminal provided in the aforementioned embodiment performs carrier processing, and in a practical application, the aforementioned processing may be allocated to and accomplished by different program modules as required, that is, an internal structure of the terminal may be divided into different program modules to accomplish all or part of the aforementioned processing. In addition, the terminal and the method for processing a carrier according to the aforementioned embodiments belong to a same concept, and a specific implementation process thereof refers to the method embodiment in detail and will not be repeated here again.

An embodiment of the present application further provides a network device. FIG. 5 is a schematic block diagram of a network device according to an embodiment of the present application. As shown in FIG. 5, the network device includes a second communicating unit 51, configured to send DCI used for indicating activation or deactivation of a component carrier to a terminal.

In an optional embodiment of the present application, a value of a specific field of the DCI is a specific value.

In an optional embodiment of the present application, when a value of a first specific field of the DCI is a first specific value, the DCI is used for indicating that the component carrier is deactivated in a first deactivation mode.

In an optional embodiment of the present application, when a value of a second specific field of the DCI is a second specific value, the DCI is used for indicating that the component carrier is deactivated in the first deactivation mode; and when the value of the second specific field is a third specific value, the DCI is used for indicating that the component carrier is deactivated in a second deactivation mode.

In an optional embodiment of the present application, when a value of a third specific field of the DCI is a fourth specific value, the DCI is used for indicating that the component carrier is deactivated in the first deactivation mode; and when a value of a fourth specific field of the DCI is a fifth specific value, the DCI is used for indicating that the component carrier is deactivated in the second deactivation mode.

In an optional embodiment of the present application, the specific field, the first specific field, the second specific field, the third specific field or the fourth specific field of the DCI is at least one of following: a newly added information field for activation or deactivation of a carrier, a frequency domain resource assignment information field, a time domain resource assignment information field, or a HARQ process number information field.

In an optional embodiment of the present application, the DCI is DCI with a specific format.

In an optional embodiment of the present application, the DCI is DCI scrambled by an RNTI in a specific format.

In an optional embodiment of the present application, the second communicating unit 51 is configured to send the DCI in a search space corresponding to the component carrier corresponding to the DCI; or, send the DCI in a pre-agreed specific component carrier; or, send the DCI in a pre-configured specific component carrier.

It should be noted that the division of the aforementioned program modules is just taken as an example for description when the network device provided in the aforementioned embodiment performs carrier processing, and in a practical application, the aforementioned processing may be allocated to and accomplished by different program modules as required, that is, an internal structure of the network device may be divided into different program modules to accomplish all or part of the aforementioned processing. In addition, the network device and the method for processing a carrier according to the aforementioned embodiments belong to a same concept, and a specific implementation process thereof refers to the method embodiment in detail and will not be repeated here again.

FIG. 6 is a schematic diagram of structure of hardware of a communication device according to an embodiment of the present application. A communication device 600 shown in FIG. 6 includes a processor 610. The processor 610 may call and run a computer program from a memory to implement the method in the embodiment of the present application.

Optionally, as shown in FIG. 6, the communication device 600 may further include a memory 620. The processor 610 may call and run a computer program from the memory 620 to implement the method in the embodiment of the present application.

Herein, the memory 620 may be a separate device independent of the processor 610 or may be integrated in the processor 610.

Optionally, as shown in FIG. 6, the communication device 600 may further include a transceiver 630, and the processor 610 may control the transceiver 630 to communicate with another device. Specifically, information or data may be sent to another device or information or data sent by another device may be received.

Herein, the transceiver 630 may include a transmitter and a receiver. The transceiver 630 may also further include antennas, wherein a quantity of antennas may be of one or more.

Optionally, the communication device 600 may be a network device of the embodiment of the present application, and the communication device 600 may implement the corresponding processes implemented by the network device in various methods of the embodiment of the present application, which will not be repeated here again for brevity.

Optionally, the communication device 600 may be specifically a terminal of the embodiment of the present application, and the communication device 600 may implement the corresponding processes implemented by the terminal in the various methods of the embodiment of the present application, which will not be repeated here again for brevity.

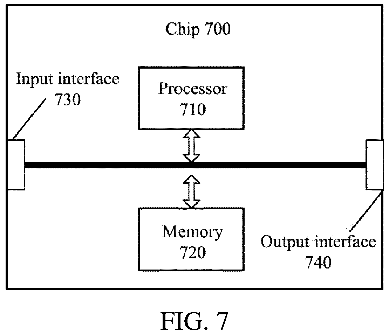

FIG. 7 is a schematic diagram of structure of a chip of an embodiment of the present application. A chip 700 shown in FIG. 7 includes a processor 710. The processor 710 may call and run a computer program from a memory to implement the method in the embodiment of the present application.

Optionally, as shown in FIG. 7, the chip 700 may further include a memory 720. Herein, the processor 710 may call and run a computer program from the memory 720 to implement the method in the embodiment of the present application.

Herein, the memory 720 may be a separate device independent of the processor 710 or may be integrated in the processor 710.

Optionally, the chip 700 may further include an input interface 730. Herein, the processor 710 may control the input interface 730 to communicate with another device or chip. Specifically, information or data sent by another device or chip may be acquired.

Optionally, the chip 700 may further include an output interface 740. Herein, the processor 710 may control the output interface 740 to communicate with another device or chip. Specifically, information or data may be outputted to another device or chip.

Optionally, the chip may be applied in a network device of the embodiment of the present application, and the chip may implement the corresponding processes implemented by the network device in various methods of the embodiment of the present application, which will not be repeated here again for brevity.

Optionally, the chip may be applied in a terminal of the embodiment of the present application, and the chip may implement the corresponding processes implemented by the terminal in the various methods of the embodiment of the present application, which will not be repeated here again for brevity.

It should be understood that the chip mentioned in the embodiment of the present application may also be referred to as a system-level chip, a system chip, a chip system or a system chip-on-chip, etc.

It should be understood that, the processor in the embodiment of the present application may be an integrated circuit chip having a signal processing capability. In an implementation process, the acts of the foregoing method embodiments may be accomplished by an integrated logic circuit of hardware in the processor or instructions in a form of software. The above processor may be a general purpose processor, a Digital Signal Processor (DSP), an Application Specific Integrated Circuit (ASIC), a Field Programmable Gate Array (FPGA) or another programmable logic device, a discrete gate or a transistor logic device, or a discrete hardware component. The methods, acts and logical block diagrams disclosed in the embodiment of the present application may be implemented or performed. The general purpose processor may be a microprocessor, or the processor may also be any conventional processor or the like. The acts of the method disclosed with reference to the embodiment of the present application may be directly embodied as being executed and accomplished by a hardware decoding processor, or being executed and accomplished by a combination of hardware and software modules in a decoding processor. The software modules may be located in a storage medium commonly used in the art, such as a random access memory, a flash memory, a read-only memory, a programmable read-only memory or an electrically erasable programmable memory, or a register, etc. The storage medium is located in a memory, and the processor reads information in the memory and accomplishes the acts of the above method in combination with hardware thereof.

It may be understood that, the memory in the embodiment of the present application may be a volatile memory or a non-volatile memory, or may include both of a volatile memory and a non-volatile memory. Herein, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. Through exemplary but not limitative description, many forms of RAMs are available, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that memories in the systems and methods described in this specification are intended to include, but are not limited to, these memories and any memory of another proper type.

It should be understood that, the foregoing memory is exemplary but not limitative description. For example, the memory in the embodiments of the present application may also be a Static RAM (SRAM), a Dynamic RAM (DRAM), a Synchronous DRAM (SDRAM), a double data rate SDRAM (DDR SDRAM), an enhanced SDRAM (ESDRAM), or a synchlink DRAM (SLDRAM), a Direct Rambus RAM (DR RAM), or the like. That is, memories in the embodiments of the present application are intended to include, but are not limited to, these memories and any memory of another proper type.

An embodiment of the present application further provides a computer readable storage medium, configured to store a computer program.

Optionally, the computer readable storage medium may be applied in a network device of the embodiment of the present application, and the computer program causes a computer to perform the corresponding processes implemented by the network device in various methods of the embodiments of the present application, which will not be repeated here again for brevity.

Optionally, the computer readable storage medium may be applied in a terminal of the embodiment of the present application, and the computer program causes a computer to perform the corresponding processes implemented by the mobile terminal/terminal device in various methods of the embodiments of the present application, which will not be repeated here again for brevity.

An embodiment of the present application also provides a computer program product, including computer program instructions.

Optionally, the computer program product may be applied in a network device of the embodiment of the present application, and the computer program instructions cause a computer to perform the corresponding processes implemented by the network device in various methods of the embodiment of the present application, which will not be repeated here again for brevity.

Optionally, the computer program product may be applied in a terminal of the embodiment of the present application, and the computer program instructions cause a computer to perform the corresponding processes implemented by the mobile terminal/terminal device in various methods according to the embodiment of the present application, which will not be repeated here again for brevity.

An embodiment of the present application also provides a computer program.

Optionally, the computer program may be applied in a network device of the embodiment of the present application. When the computer program is run on a computer, the computer is caused to perform the corresponding processes implemented by the network device in various methods of the embodiments of the present application, which will not be repeated here again for brevity.

Optionally, the computer program may be applied in a terminal of the embodiment of the present application. When the computer program is run on a computer, the computer is caused to perform the corresponding processes implemented by the mobile terminal/terminal device in various methods of the embodiments of the present application, which will not be repeated here again for brevity.

Those of ordinary skill in the art will recognize that the exemplary units and algorithm acts described in combination with the embodiments disclosed herein can be implemented in electronic hardware, or a combination of computer software and electronic hardware. Whether these functions being executed in a hardware or software mode depend on a specific application and design constraint condition of the technical solution. Skilled artisans may use different methods to implement the described functions in respect to each particular application, but such implementation should not be considered to be beyond the scope of the present application.

Those skilled in the art may clearly learn that for convenience and conciseness of description, specific working processes of the systems, the apparatuses and the units described above may refer to the corresponding processes in the aforementioned method embodiments, which will not be repeated here again for brevity.

In several embodiments provided by the present application, it should be understood that the disclosed systems, apparatuses and methods may be implemented in another manner. For example, the apparatus embodiments described above are only illustrative, for example, the division of the units is only a logical function division, and there may be another division manner in an actual implementation, for example, multiple units or components may be combined or integrated into another system, or some features may be ignored or not executed. At another point, the mutual coupling or the direct coupling or the communication connection shown or discussed may be indirect coupling or a communication connection through some interfaces, apparatuses or units, and may be in electrical, mechanical or another form.

The unit described as a separate component may or may not be physically separated, and the component shown as a unit may or may not be a physical unit, i.e., it may be located in one place or may be distributed over multiple network units. Part or all of the units therein may be selected according to an actual need to achieve the purpose of the solution of the present embodiment.

In addition, various functional units in various embodiments of the present application may be integrated in one processing unit, or the various units may be physically present separately, or two or more units may be integrated in one unit.

The functions may be stored in a computer readable storage medium, if realized in a form of software functional units and sold or used as a separate product. Based on this understanding, the technical solution of the present application, in essence, or the part contributing to the prior art, or the part of the technical solution, may be embodied in the form of a software product, wherein the computer software product is stored in a storage medium and includes a number of instructions for causing a computer device (which may be a personal computer, a server, or a network device, or the like) to perform all or part of the acts of the method described in various embodiments of the present application. And the aforementioned storage medium includes various medium that may store program codes, such as a USB flash disk, a removable hard disk, a Read-Only Memory (ROM), an RAM, a magnetic disk, or an optical disk, etc.

What are described above are merely specific implementations of the present application, but the protection scope of the present application is not limited thereto.

The protection scope of the present application shall be subjected to the protection scope of the claims.

## Claims

1. A method for processing a carrier, comprising:
receiving (201), by a terminal, Downlink Control Information, DCI, within a first time unit; and
activating or deactivating (202), by the terminal, a component carrier corresponding to the DCI based on an indication of the DCI,
wherein activating or deactivating, by the terminal, the component carrier corresponding to the DCI based on the indication of the DCI comprises:
activating or deactivating, by the terminal, the component carrier corresponding to the DCI, when a value of a specific field of the DCI is a specific value,
wherein when a value of a second specific field of the DCI is a second specific value, deactivating, by the terminal, the component carrier corresponding to the DCI in a first deactivation mode; and wherein
when the value of the second specific field is a third specific value, deactivating, by the terminal, the component carrier corresponding to the DCI in a second deactivation mode,
wherein when the terminal deactivates the component carrier corresponding to the DCI in the first deactivation mode, a behavior of the terminal on the component carrier comprises at least one of following behaviors:
not sending any Sounding Reference Signal, SRS; not performing any measurement of Channel Quality Indicators, CQIs, and not reporting any CQI, Precoding Matrix Indicator, PMI, Rank Indication, RI or Precoding Type Indication, PTI; not transmitting uplink data; not detecting any Physical Downlink Control Channel, PDCCH, used for the component carrier and transmitted on the component carrier; or reducing a frequency of a measurement, if it is used as a reference for a path loss measurement in an uplink power control,
wherein when the terminal deactivates the component carrier corresponding to the DCI in the second deactivation mode, a behavior of the terminal on the component carrier comprises at least one of following behaviors:
performing a measurement of a CQI, reporting at least one kind of information of a CQI, a PMI, an RI or a PTI; or performing a Radio Resource Management, RRM, measurement.

2. The method of claim 1, wherein activating or deactivating, by the terminal, the component carrier corresponding to the DCI based on the indication of the DCI comprises:
when a value of a first specific field of the DCI is a first specific value, deactivating, by the terminal, the component carrier corresponding to the DCI in a deactivation mode; or, activating, by the terminal, the component carrier corresponding to the DCI in an activation mode.

3. The method of claim 1, wherein activating or deactivating, by the terminal, the component carrier corresponding to the DCI based on the indication of the DCI comprises:
when a value of a third specific field of the DCI is a fourth specific value, deactivating, by the terminal, the component carrier corresponding to the DCI in the first deactivation mode; and
when the value of a fourth specific field of the DCI is a fifth specific value, deactivating, by the terminal, the component carrier corresponding to the DCI in the second deactivation mode.

4. The method of claim 1, wherein receiving the Downlink Control Information, DCI, comprises:
receiving, by the terminal, the DCI in a search space corresponding to the component carrier corresponding to the DCI; or,
receiving, by the terminal, the DCI in a pre-agreed specific component carrier; or,
receiving, by the terminal, the DCI in a pre-configured specific component carrier.

5. A terminal, comprising: a first communicating unit (41) and a first processing unit (42); wherein,
the first communicating unit (41) is configured to receive Downlink Control Information, DCI, within a first time unit; and
the first processing unit (42) is configured to activate or deactivate a component carrier corresponding to the DCI based on an indication of the DCI received by the first communicating unit (41), wherein when a value of a specific field of the DCI is a specific value, the component carrier corresponding to the DCI is activated or deactivated,
wherein when a value of a second specific field of the DCI is a second specific value, the component carrier corresponding to the DCI is deactivated in a first deactivation mode; and when the value of the second specific field is a third specific value, the component carrier corresponding to the DCI is deactivated in a second deactivation mode,
wherein when the component carrier corresponding to the DCI is deactivated in the first deactivation mode, a behavior of the terminal on the component carrier comprises at least one of following behaviors:
not sending any Sounding Reference Signal, SRS; not performing any measurement of Channel Quality Indicators, CQIs, and not reporting any CQI, Precoding Matrix Indicator, PMI, Rank Indication, RI or Precoding Type Indication, PTI; not transmitting uplink data; not detecting any Physical Downlink Control Channel, PDCCH, used for the component carrier and transmitted on the component carrier; or reducing a frequency of a measurement, if it is used as a reference for a path loss measurement in an uplink power control,
wherein when the component carrier corresponding to the DCI is deactivated in the second deactivation mode, a behavior of the terminal on the component carrier comprises at least one of following behaviors:
performing a measurement of a CQI, reporting at least one kind of information of a CQI, a PMI, an RI or a PTI; or performing a Radio Resource Management, RRM, measurement.

6. The terminal of claim 5, wherein the DCI is DCI with a specific format; or the DCI is DCI scrambled by a RNTI in a specific format.

7. A network device, comprising a second communicating unit (51), configured to send DCI used for indicating activation or deactivation of a component carrier to a terminal, wherein a value of a specific field of the DCI is a specific value,
wherein when a value of a second specific field of the DCI is a second specific value, the DCI is used for indicating that the component carrier is deactivated in a first deactivation mode; and when the value of the second specific field is a third specific value, the DCI is used for indicating that the component carrier is deactivated in a second deactivation mode,
wherein when the DCI is used for indicating that the component carrier is deactivated in the first deactivation mode, the DCI causes the terminal to perform at least one of following behaviors on the component carrier:
not sending any Sounding Reference Signal, SRS; not performing any measurement of Channel Quality Indicators, CQIs, and not reporting any CQI, Precoding Matrix Indicator, PMI, Rank Indication, RI or Precoding Type Indication, PTI; not transmitting uplink data; not detecting any Physical Downlink Control Channel, PDCCH, used for the component carrier and transmitted on the component carrier; or reducing a frequency of a measurement, if it is used as a reference for a path loss measurement in an uplink power control,
wherein when the DCI is used for indicating that the component carrier is deactivated in the second deactivation mode, the DCI causes the terminal to perform at least one of following behaviors on the component carrier:
performing a measurement of a CQI, reporting at least one kind of information of a CQI, a PMI, an RI or a PTI; or performing a Radio Resource Management, RRM, measurement.

8. The network device of claim 7, wherein when a value of a first specific field of the DCI is a first specific value, the DCI is used for indicating that the component carrier is deactivated in a first deactivation mode.

9. The network device of claim 7, wherein when a value of a third specific field of the DCI is a fourth specific value, the DCI is used for indicating that the component carrier is deactivated in the first deactivation mode; and
when a value of a fourth specific field of the DCI is a fifth specific value, the DCI is used for indicating that the component carrier is deactivated in the second deactivation mode.

## Patentansprüche

1. Verfahren zum Verarbeiten eines Trägers, umfassend:
Empfangen (201), in einem Endgerät von Downlink-Steuerinformationen (Downlink Control Information, DCI) innerhalb einer ersten Zeiteinheit; und
Aktivieren oder Deaktivieren (202), durch das Endgerät, eines Komponententrägers, der den DCI entspricht, basierend auf einer Anzeige in den DCI,
wobei das Aktivieren oder Deaktivieren, durch das Endgerät, des Komponententrägers, der den DCI entspricht, basierend auf der Anzeige in den DCI, umfasst:
Aktivieren oder Deaktivieren, durch das Endgerät, des Komponententrägers, der den DCI entspricht, wenn ein Wert eines spezifischen Feldes der DCI ein spezifischer Wert ist, wobei, wenn ein Wert eines zweiten spezifischen Feldes der DCI ein zweiter spezifischer Wert ist, Deaktivieren, durch das Endgerät, des Komponententrägers, der den DCI entspricht, in einem ersten Deaktivierungsmodus; und wobei, wenn der Wert des zweiten spezifischen Feldes ein dritter spezifischer Wert ist, Deaktivieren, durch das Endgerät, des Komponententrägers, der den DCI entspricht, in einem zweiten Deaktivierungsmodus,
wobei, wenn das Endgerät den Komponententräger, der den DCI entspricht, in dem ersten Deaktivierungsmodus deaktiviert, eine Verhaltensweise des Endgeräts auf dem Komponententräger mindestens eine der folgenden Verhaltensweisen aufweist:
Nicht-Senden irgendeines Sondierungsreferenzsignals, SRS; Nicht-Durchführen irgendeiner Messung von Kanalqualitätsindikatoren (Channel Quality Indicators, CQIs), und Nicht-Melden irgendeines CQI, irgendeines Vorcodierungsmatrixindikators (Precoding Matrix Indicator, PMI), irgendeiner Ranganzeige (Rank Indication, RI) oder irgendeiner Vorcodierungstypanzeige (Precoding Type Indication, PTI); Nicht-Übertragen von Uplink-Daten; Nicht-Erkennen irgendeines physischen Downlink-Steuerkanals (Physical Downlink Control Channel, PDCCH), der für den Komponententräger verwendet wird und auf dem Komponententräger übertragen wird; oder Verringern einer Häufigkeit einer Messung, wenn sie als eine Referenz für eine Pfadverlustmessung in einer Uplink-Leistungssteuerung verwendet wird,
wobei, wenn das Endgerät den Komponententräger, der den DCI entspricht, in dem zweiten Deaktivierungsmodus deaktiviert, eine Verhaltensweise des Endgeräts auf dem Komponententräger mindestens eine der folgenden Verhaltensweisen aufweist:
Durchführen einer Messung eines CQI, Melden mindestens einer Art von Informationen eines CQI, eines PMI, einer RI oder einer PTI; oder Durchführen einer Funkressourcenverwaltungsmessung (Radio Resource Management measurement, RRM-Messung).

2. Verfahren nach Anspruch 1, wobei das Aktivieren oder Deaktivieren, durch das Endgerät, des Komponententrägers, der den DCI entspricht, basierend auf der Anzeige in den DCI, umfasst:
wenn ein Wert eines ersten spezifischen Feldes der DCI ein erster spezifischer Wert ist, Deaktivieren, durch das Endgerät, des Komponententrägers, der den DCI entspricht, in einem Deaktivierungsmodus; oder, Aktivieren, durch das Endgerät, des Komponententrägers, der den DCI entspricht, in einem Aktivierungsmodus.

3. Verfahren nach Anspruch 1, wobei das Aktivieren oder Deaktivieren, durch das Endgerät, des Komponententrägers, der den DCI entspricht, basierend auf der Anzeige in den DCI, umfasst:
wenn ein Wert eines dritten spezifischen Feldes der DCI ein vierter spezifischer Wert ist, Deaktivieren, durch das Endgerät, des Komponententrägers, der den DCI entspricht, in dem ersten Deaktivierungsmodus; und
wenn ein Wert eines vierten spezifischen Feldes der DCI ein fünfter spezifischer Wert ist, Deaktivieren, durch das Endgerät, des Komponententrägers, der den DCI entspricht, in dem zweiten Deaktivierungsmodus.

4. Verfahren nach Anspruch 1, wobei das Empfangen der Downlink-Steuerinformationen, DCI, umfasst:
Empfangen, in dem Endgerät, der DCI in einem Suchraum, der dem Komponententräger entspricht, der den DCI entspricht; oder
Empfangen, in dem Endgerät, der DCI in einem zuvor vereinbarten Komponententräger; oder
Empfangen, in dem Endgerät, der DCI in einem vorkonfiguriert spezifischen Komponententräger.

5. Endgerät, umfassend: eine erste Kommunikationseinheit (41) und eine erste Verarbeitungseinheit (42); wobei:
die erste Kommunikationseinheit (41) konfiguriert ist zum Empfangen von Downlink-Steuerinformationen (Downlink Control Information, DCI) innerhalb einer ersten Zeiteinheit; und
die erste Verarbeitungseinheit (42) konfiguriert ist zum Aktivieren oder Deaktivieren eines Komponententrägers, der den DCI entspricht, basierend auf einer Anzeige in den DCI, die in der ersten Kommunikationseinheit (41) empfangen werden, wobei, wenn ein Wert eines spezifischen Feldes der DCI ein spezifischer Wert ist, der Komponententräger, der den DCI entspricht, aktiviert oder deaktiviert wird,
wobei, wenn ein Wert eines zweiten spezifischen Feldes der DCI ein zweiter spezifischer Wert ist, der Komponententräger, der den DCI entspricht, in einem ersten Deaktivierungsmodus deaktiviert wird; und wobei, wenn der Wert des zweiten spezifischen Feldes ein dritter spezifischer Wert ist, der Komponententräger, der den DCI entspricht, in einem zweiten Deaktivierungsmodus deaktiviert wird,
wobei, wenn der Komponententräger, der den DCI entspricht, in dem ersten Deaktivierungsmodus deaktiviert wird, eine Verhaltensweise des Endgeräts auf dem Komponententräger mindestens eine der folgenden Verhaltensweisen aufweist:
Nicht-Senden irgendeines Sondierungsreferenzsignals, SRS; Nicht-Durchführen irgendeiner Messung von Kanalqualitätsindikatoren (Channel Quality Indicators, CQIs), und Nicht-Melden irgendeines CQI, irgendeines Vorcodierungsmatrixindikators (Precoding Matrix Indicator, PMI), irgendeiner Ranganzeige (Rank Indication, RI) oder irgendeiner Vorcodierungstypanzeige (Precoding Type Indication, PTI); Nicht-Übertragen von Uplink-Daten; Nicht-Erkennen irgendeines physischen Downlink-Steuerkanals (Physical Downlink Control Channel, PDCCH), der für den Komponententräger verwendet wird und auf dem Komponententräger übertragen wird; oder Verringern einer Häufigkeit einer Messung, wenn sie als eine Referenz für eine Pfadverlustmessung in einer Uplink-Leistungssteuerung verwendet wird,
wobei, wenn der Komponententräger, der den DCI entspricht, in dem zweiten Deaktivierungsmodus deaktiviert wird, eine Verhaltensweise des Endgeräts auf dem Komponententräger mindestens eine der folgenden Verhaltensweisen aufweist:
Durchführen einer Messung eines CQI, Melden mindestens einer Art von Informationen eines CQI, eines PMI, einer RI oder einer PTI; oder Durchführen einer Funkressourcenverwaltungsmessung (Radio Resource Management measurement, RRM-Messung).

6. Endgerät nach Anspruch 5, wobei die DCI DCI mit einem spezifischen Format sind; oder wobei die DCI DCI sind, die durch eine RNTI in einem spezifischen Format verschlüsselt werden.

7. Netzwerkvorrichtung die eine zweite Kommunikationseinheit (51) umfasst, die konfiguriert ist zum Senden von DCI, die verwendet werden um eine Aktivierung oder Deaktivierung eines Komponententrägers für ein Endgerät anzuzeigen, wobei ein Wert eines spezifischen Feldes der DCI ein spezifischer Wert ist,
wobei, wenn ein Wert eines zweiten spezifischen Feldes der DCI ein zweiter spezifischer Wert ist, die DCI verwendet werden, um anzuzeigen, dass der Komponententräger in einem ersten Deaktivierungsmodus deaktiviert wird; und wobei, wenn der Wert des zweiten spezifischen Feldes ein dritter spezifischer Wert ist, die DCI verwendet werden, um anzuzeigen, dass der Komponententräger in einem zweiten Deaktivierungsmodus deaktiviert wird,
wobei, wenn die DCI verwendet werden, um anzuzeigen, dass der Komponententräger in dem ersten Deaktivierungsmodus deaktiviert wird, die DCI das Endgerät veranlassen, mindestens eine der folgenden Verhaltensweisen an dem Komponententräger durchzuführen:
Nicht-Senden irgendeines Sondierungsreferenzsignals, SRS; Nicht-Durchführen irgendeiner Messung von Kanalqualitätsindikatoren (Channel Quality Indicators, CQIs), und Nicht-Melden irgendeines CQI, irgendeines Vorcodierungsmatrixindikators (Precoding Matrix Indicator, PMI), irgendeiner Ranganzeige (Rank Indication, RI) oder irgendeiner Vorcodierungstypanzeige (Precoding Type Indication, PTI); Nicht-Übertragen von Uplink-Daten; Nicht-Erkennen irgendeines physischen Downlink-Steuerkanals (Physical Downlink Control Channel, PDCCH), der für den Komponententräger verwendet wird und auf dem Komponententräger übertragen wird; oder Verringern einer Häufigkeit einer Messung, wenn sie als eine Referenz für eine Pfadverlustmessung in einer Uplink-Leistungssteuerung verwendet wird,
wobei, wenn die DCI verwendet werden, um anzuzeigen, dass der Komponententräger in dem zweiten Deaktivierungsmodus deaktiviert wird, die DCI das Endgerät veranlassen, mindestens eine der folgenden Verhaltensweisen an dem Komponententräger durchzuführen:
Durchführen einer Messung eines CQI, Melden mindestens einer Art von Informationen eines CQI, eines PMI, einer RI oder einer PTI; oder Durchführen einer Funkressourcenverwaltungsmessung (Radio Resource Management measurement, RRM-Messung).

8. Netzwerkvorrichtung nach Anspruch 7, wobei, wenn ein Wert eines ersten spezifischen Feldes der DCI ein erster spezifischer Wert ist, die DCI verwendet werden, um anzuzeigen, dass der Komponententräger in einem ersten Deaktivierungsmodus deaktiviert wird.

9. Netzwerkvorrichtung nach Anspruch 7, wobei, wenn ein Wert eines dritten spezifischen Feldes der DCI ein vierter spezifischer Wert ist, die DCI verwendet werden, um anzuzeigen, dass der Komponententräger in dem ersten Deaktivierungsmodus deaktiviert wird; und
wobei, wenn ein Wert eines vierten spezifischen Feldes der DCI ein fünfter spezifischer Wert ist, die DCI verwendet werden, um anzuzeigen, dass der Komponententräger in dem zweiten Deaktivierungsmodus deaktiviert wird.

## Revendications

1. Procédé de traitement d'une porteuse, comprenant :
la réception (201), par un terminal, d'informations de commande de liaison descendante, DCI, dans une première unité de temps ; et
l'activation ou la désactivation (202), par le terminal, d'une composante porteuse correspondant aux DCI sur la base d'une indication des DCI,
l'activation ou la désactivation, par le terminal, de la composante porteuse correspondant aux DCI sur la base de l'indication des DCI comprenant :
l'activation ou la désactivation, par le terminal, de la composante porteuse correspondant aux DCI, lorsqu'une valeur d'un champ spécifique des DCI est une valeur spécifique,
lorsqu'une valeur d'un deuxième champ spécifique des DCI est une deuxième valeur spécifique, la désactivation, par le terminal, de la composante porteuse correspondant aux DCI dans un premier mode de désactivation ; et
lorsque la valeur du deuxième champ spécifique est une troisième valeur spécifique, la désactivation, par le terminal, de la composante porteuse correspondant aux DCI dans un deuxième mode de désactivation,
lorsque le terminal désactive la composante porteuse correspondant aux DCI dans le premier mode de désactivation, un comportement du terminal sur la composante porteuse comprenant au moins l'un des comportements suivants :
ne pas envoyer de signal de référence sonore, SRS ; ne pas effectuer de mesure des indicateurs de qualité de canal, CQI, et ne signaler aucun CQI, d'indicateur de matrice de précodage, PMI, d'indication de rang, RI ou d'indication de type de précodage, PTI ; ne pas transmettre de données de liaison montante ; ne pas détecter de canal de commande de liaison descendante physique, PDCCH, utilisé pour la composante porteuse et transmis sur la composante porteuse ; ou réduire la fréquence d'une mesure, si elle est utilisée comme référence pour une mesure d'affaiblissement sur le trajet dans une commande de puissance de liaison montante,
lorsque le terminal désactive la composante porteuse correspondant aux DCI dans le deuxième mode de désactivation, un comportement du terminal sur la composante porteuse comprenant au moins l'un des comportements suivants :
réalisation d'une mesure d'un CQI, communication d'au moins un type d'information d'un CQI, d'un PMI, d'un RI ou d'un PTI ; ou réalisation d'une mesure de gestion des ressources radio, RRM.

2. Procédé selon la revendication 1, l'activation ou la désactivation, par le terminal, de la composante porteuse correspondant aux DCI sur la base de l'indication des DCI comprenant :
lorsqu'une valeur d'un premier champ spécifique des DCI est une première valeur spécifique, la désactivation, par le terminal, de la composante porteuse correspondant aux DCI dans un mode de désactivation ; ou, l'activation, par le terminal, de la composante porteuse correspondant aux DCI dans un mode d'activation.

3. Procédé selon la revendication 1, l'activation ou la désactivation, par le terminal, de la composante porteuse correspondant aux DCI sur la base de l'indication des DCI comprenant :
lorsqu'une valeur d'un troisième champ spécifique des DCI est une quatrième valeur spécifique, la désactivation, par le terminal, de la composante porteuse correspondant aux DCI dans le premier mode de désactivation ; et
lorsque la valeur d'un quatrième champ spécifique des DCI est une cinquième valeur spécifique, la désactivation, par le terminal, de la composante porteuse correspondant aux DCI dans le deuxième mode de désactivation.

4. Procédé selon la revendication 1, la réception des informations de commande de liaison descendante, DCI, comprenant :
la réception, par le terminal, des DCI dans un espace de recherche correspondant à la composante porteuse correspondant aux DCI ; ou,
la réception, par le terminal, des DCI dans une composante porteuse spécifique convenue à l'avance ; ou,
la réception, par le terminal, des DCI dans une composante porteuse spécifique préconfigurée.

5. Terminal comprenant : une première unité de communication (41) et une première unité de traitement (42) ;
la première unité de communication (41) étant configurée pour recevoir des informations de commande de liaison descendante, DCI, dans une première unité de temps ; et
la première unité de traitement (42) étant configurée pour activer ou désactiver une composante porteuse correspondant aux DCI sur la base d'une indication des DCI reçue par la première unité de communication (41), lorsqu'une valeur d'un champ spécifique des DCI est une valeur spécifique, la composante porteuse correspondant aux DCI étant activée ou désactivée,
lorsqu'une valeur d'un deuxième champ spécifique des DCI est une deuxième valeur spécifique, la composante porteuse correspondant aux DCI étant désactivée dans un premier mode de désactivation ; et lorsque la valeur du deuxième champ spécifique est une troisième valeur spécifique, la composante porteuse correspondant aux DCI étant désactivée dans un deuxième mode de désactivation,
lorsque la composante porteuse correspondant aux DCI est désactivée dans le premier mode de désactivation, un comportement du terminal sur la composante porteuse comprenant au moins l'un des comportements suivants :
ne pas envoyer de signal de référence sonore, SRS ; ne pas effectuer de mesure des indicateurs de qualité de canal, CQI, et ne signaler aucun CQI, d'indicateur de matrice de précodage, PMI, d'indication de rang, RI ou d'indication de type de précodage, PTI ; ne pas transmettre de données de liaison montante ; ne pas détecter de canal de commande de liaison descendante physique, PDCCH, utilisé pour la composante porteuse et transmis sur la composante porteuse ; ou réduire la fréquence d'une mesure, si elle est utilisée comme référence pour une mesure d'affaiblissement sur le trajet dans une commande de puissance de liaison montante,
lorsque la composante porteuse correspondant aux DCI est désactivée dans le deuxième mode de désactivation, un comportement du terminal sur la composante porteuse comprenant au moins l'un des comportements suivants :
réalisation d'une mesure d'un CQI, communication d'au moins un type d'information d'un CQI, d'un PMI, d'un RI ou d'un PTI ; ou réalisation d'une mesure de gestion des ressources radio, RRM.

6. Terminal selon la revendication 5, les DCI étant des DCI avec un format spécifique ; ou les DCI étant des DCI brouillées par un RNTI dans un format spécifique.

7. Dispositif de réseau, comprenant une deuxième unité de communication (51), configuré pour envoyer des DCI utilisées pour indiquer l'activation ou la désactivation d'une composante porteuse à un terminal, une valeur d'un champ spécifique des DCI étant une valeur spécifique,
lorsqu'une valeur d'un deuxième champ spécifique des DCI est une deuxième valeur spécifique, les DCI étant utilisées pour indiquer que la composante porteuse est désactivée dans un premier mode de désactivation ; et lorsque la valeur du deuxième champ spécifique est une troisième valeur spécifique, les DCI étant utilisées pour indiquer que la composante porteuse est désactivée dans un deuxième mode de désactivation,
lorsque les DCI sont utilisées pour indiquer que la composante porteuse est désactivée dans le premier mode de désactivation, les DCI amenant le terminal à effectuer au moins l'un des comportements suivants sur la composante porteuse :
ne pas envoyer de signal de référence sonore, SRS ; ne pas effectuer de mesure des indicateurs de qualité de canal, CQI, et ne signaler aucun CQI, d'indicateur de matrice de précodage, PMI, d'indication de rang, RI ou d'indication de type de précodage, PTI ; ne pas transmettre de données de liaison montante ; ne pas détecter de canal de commande de liaison descendante physique, PDCCH, utilisé pour la composante porteuse et transmis sur la composante porteuse ; ou réduire la fréquence d'une mesure, si elle est utilisée comme référence pour une mesure d'affaiblissement sur le trajet dans une commande de puissance de liaison montante,
lorsque les DCI sont utilisées pour indiquer que la composante porteuse est désactivée dans le deuxième mode de désactivation, les DCI amenant le terminal à effectuer au moins l'un des comportements suivants sur la composante porteuse :
réalisation d'une mesure d'un CQI, communication d'au moins un type d'information d'un CQI, d'un PMI, d'un RI ou d'un PTI ; ou réalisation d'une mesure de gestion des ressources radio, RRM.

8. Dispositif de réseau selon la revendication 7, lorsqu'une valeur d'un premier champ spécifique des DCI est une première valeur spécifique, les DCI étant utilisées pour indiquer que la composante porteuse est désactivée dans un premier mode de désactivation.

9. Dispositif de réseau selon la revendication 7, lorsqu'une valeur d'un troisième champ spécifique des DCI est une quatrième valeur spécifique, les DCI étant utilisées pour indiquer que la composante porteuse est désactivée dans le premier mode de désactivation ; et lorsqu'une valeur d'un quatrième champ spécifique des DCI est une cinquième valeur spécifique, les DCI étant utilisées pour indiquer que la composante porteuse est désactivée dans le deuxième mode de désactivation.
